(19) Europäisches Patentamt
European Patent Office
Office européen des brevets

(11) EP 2 769 959 A1

(12) **EUROPEAN PATENT APPLICATION**
published in accordance with Art. 153(4) EPC

(43) Date of publication:
**27.08.2014 Bulletin 2014/35**

(21) Application number: **12842562.6**

(22) Date of filing: **18.10.2012**

(51) Int Cl.:
***C01B 13/14*** *(2006.01)*
***C01F 7/02*** *(2006.01)*
***C01G 23/047*** *(2006.01)*
***C09C 1/00*** *(2006.01)*
***C09C 3/12*** *(2006.01)*

(86) International application number:
**PCT/JP2012/006663**

(87) International publication number:
**WO 2013/057945 (25.04.2013 Gazette 2013/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.10.2011 JP 2011229218**
**16.01.2012 JP 2012006171**

(71) Applicant: **Nippon Soda Co., Ltd.**
**Tokyo 100-8165 (JP)**

(72) Inventors:
- **SHIMADA, Mikiya**
**Chiba 290-0045 (JP)**
- **NAKAMOTO, Norifumi**
**Chiba 290-0045 (JP)**
- **ARAI, Koutarou**
**Niigata 949-2392 (JP)**
- **HIDAKA, Tomoya**
**Chiba 290-0045 (JP)**

(74) Representative: **Wibbelmann, Jobst**
**Wuesthoff & Wuesthoff**
**Patent- und Rechtsanwälte**
**Schweigerstrasse 2**
**81541 München (DE)**

# (54) SURFACE-COVERED INORGANIC POWDER

(57) The present invention provides a surface-covered inorganic powder having novel physical properties. The surface-covered inorganic powder is an inorganic powder covered with a monolayer formed by at least one structural unit represented by formula (I):
(wherein $R^1$ represents an alkyl group having 1 to 30 carbon atoms and optionally having a substituent, $X^1$ and $X^2$ each independently represent a hydroxyl group, or an $OR^2$ or O-Si bond, and • represents a binding site to an atom on the inorganic powder side),
wherein the monolayer is at least partially crystalline. The surface-covered inorganic powder is produced by, for example, bringing an inorganic powder into contact with a solution for forming an organic thin film containing (A) at least one compound represented by formula (II) (wherein $R^1$ represents an alkyl group having 1 to 30 carbon atoms and optionally having a substituent, $X^3$ represents a hydrolyzable group, and n represents any integer of 1 to 3), (B) water of 10 ppm to a saturating concentration, and (C) an organic solvent.

FIG. 1

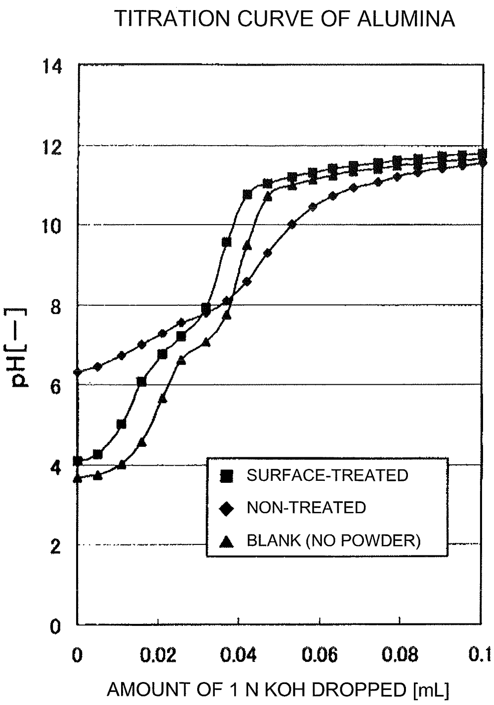


EP 2 769 959 A1

## Description

### Technical Field

The present invention relates to a surface-covered inorganic powder useful as a filler or the like. In particular, it relates to an inorganic powder surface-covered with a monolayer derived from an organosilane compound.
The present application claims the priorities of Japanese Patent Application No. 2011-229218 filed on October 18, 2011 and Japanese Patent Application No. 2012-006171 filed on January 16, 2012, the contents of which are herein incorporated.

### Background Art

Conventionally, modifying of the surface of a substrate made of glass, metal, plastics, ceramics, or the like depending on the purpose has been performed in various fields. For example, in order to impart water repellency or oil repellency to the surface of glass or plastics, coating of the surface with a fluorine-containing silane-based surfactant has been performed (Patent Documents 1 to 6).
In addition, there has been demanded for developing a technique for rapidly forming a dense monolayer having few impurities particularly in the fields of fine patterning in the design of an electrical device or the like, and an alkoxysilane-based surfactant containing no fluorine has also been developed (Patent Document 7).
On the other hand, modifying of the surface of a powder such as an inorganic powder has also been conventionally performed. Examples of such a powder include silicones such as a silane-based coupling agent or surfactant, for example, dimethicone, hydrogenmethylpolysiloxane and perfluoroalkyl dimethylmethoxysilane, fluorine-based compounds such as a perfluoroalkylphosphoric acid diethanolamine salt and a perfluoroalkyl group-containing phosphoric acid ester, fatty acid metal soaps such as zinc stearate, acylated amino acid derivatives such as aluminum acylglutamate, lecithin or a metal salt thereof, and phosphate triester-modified organo(poly)siloxane (for example, Patent Documents 8 to 18).
Furthermore, although Patent Document 19 describes a fine particle covered with a monolayer, it is not known that a crystalline monolayer can be formed on a non-planar base material like an inorganic powder. Similarly, a method for forming a monolayer on an inorganic powder at a high covering rate is not known, either.

### Prior Art Documents

### Patent Documents

[Patent Document 1] Japanese unexamined Patent Application Publication No. 4-132637
[Patent Document 2] Japanese unexamined Patent Application Publication No. 4-221630
[Patent Document 3] Japanese unexamined Patent Application Publication No. 4-367721
[Patent Document 4] Japanese unexamined Patent Application Publication No. 8-337654
[Patent Document 5] Japanese unexamined Patent Application Publication No. 11-228942
[Patent Document 6] Japanese unexamined Patent Application Publication No. 11-322368
[Patent Document 7] WO2006/009202
[Patent Document 8] Japanese unexamined Patent Application Publication No. 5-339518
[Patent Document 9] Japanese unexamined Patent Application Publication No. 2003-55142
[Patent Document 10] Japanese unexamined Patent Application Publication No. 2009-263213
[Patent Document 11] Japanese unexamined Patent Application Publication No. 62-250074
[Patent Document 12] Japanese unexamined Patent Application Publication No. 10-167931
[Patent Document 13] Japanese unexamined Patent Application Publication No. 10-203926
[Patent Document 14] Japanese unexamined Patent Application Publication No. 11-335227
[Patent Document 15] Japanese unexamined Patent RePublication No. 2006-106728
[Patent Document 16] Japanese unexamined Patent Application Publication No. 2008-247834
[Patent Document 17] Japanese unexamined Patent Application Publication No. 09-136815
[Patent Document 18] Japanese unexamined Patent Application Publication No. 09-157397
[Patent Document 19] Japanese unexamined Patent Application Publication No. 2007-117828

## Summary of the Invention

### Object to be Solved by the Invention

An object of the present invention is to provide a surface-covered inorganic powder having excellent characteristics in terms of dispersibility, fluidity, filling density, slidability, lubricity, liquid repellency, non-adhesiveness, acid resistance, alkali resistance, shape retention performance, storage stability, safety, affinity for a solvent or a resin, bioaffinity, molecular recognition ability, and the like.

### Means to Solve the Object

The present inventors have made intensive studies in order to solve the above problems, and as a result, have found that an inorganic powder is surface-covered with a crystalline monolayer derived from an organosilane compound such as a hydrolysate of octadecyltrimethoxysilane and/or an oligomer thereof to thereby provide an inorganic powder having more excellent characteristics as a filler and the like for various materials, leading to the completion of the present invention.

That is, the present invention relates to an inorganic powder covered with a monolayer formed by at least one structural unit represented by formula (I):

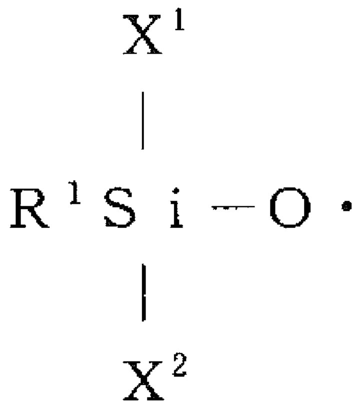

(I)

(wherein $R^1$ represents an alkyl group having 1 to 30 carbon atoms and optionally having a substituent, $X^1$ and $X^2$ each independently represent a hydroxyl group, or an $OR^2$ or O-Si bond, and • represents a binding site to an atom on the inorganic powder),
wherein the monolayer is at least partially crystalline, and

(2) the inorganic powder according to (1) wherein $R^1$ is an octadecyl group.

The present invention also relates to:

(3) a method for producing an inorganic powder at least partially covered with a crystalline monolayer, including bringing an inorganic powder into contact with a solution for forming an organic thin film containing:

(A) at least one compound represented by formula (II)

$$R^1Si(OH)_nX^3_{3-n} \qquad (II)$$

(wherein $R^1$ represents an alkyl group having 1 to 30 carbon atoms and optionally having a substituent, $X^3$ represents a hydrolyzable group, and n represents any integer of 1 to 3),
(B) water of 10 ppm to a saturating concentration,
and
(C) an organic solvent,

(4) the method for producing an inorganic powder according to (3), wherein the solution for forming an organic thin film further contains at least one compound represented by formula (III):

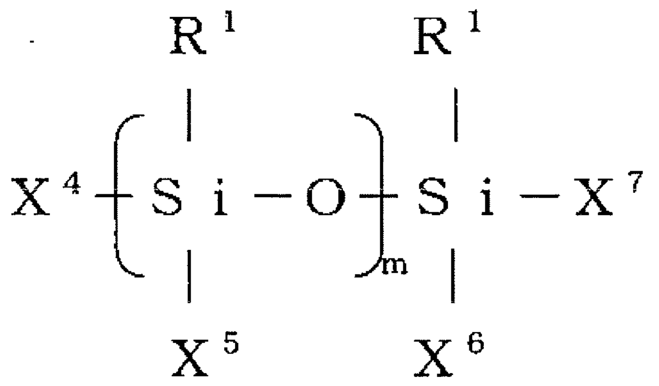

(III)

(wherein each $R^1$ each independently represents the same substituent as in $R^1$ in formula (II), $X^4$, $X^5$, $X^6$ and $X^7$ each independently represent a hydroxyl group or a hydrolyzable group, $X^4$ and $X^7$ may together be an oxygen atom, thereby forming a ring in which Si and an oxygen atom are alternately bound to each other, and m represents any integer of 1 to 3),

(5) the method for producing an inorganic powder according to (3) or (4), wherein a content of the compound represented by formula (II) in the solution for forming an organic thin film is 0.01% by mass or more, and
(6) the method for producing an inorganic powder according to (3) or (4), wherein the organic solvent is at least one solvent selected from the group consisting of a hydrocarbon-based solvent, a fluorine-based solvent and a silicon-based solvent.

## Brief Description of Drawings

[Figure 1] Figure 1 is a graph showing a titration curve of alumina.
[Figure 2] Figure 2 is a schematic diagram of a hexagonal crystal.
[Figure 3] Figure 3 is a diagram showing IR spectra of surface-covered powders (E-7, E-8 and E-9) of the present invention.

## Mode of Carrying Out the Invention

1 Inorganic Powder

In the present invention, an inorganic powder to be surface-covered includes the following:

besides metal oxides such as titanium oxide, iron oxide, zinc oxide, aluminum oxide, zirconium oxide, silicon oxide, magnesium oxide and chromium oxide; carbonates such as magnesium carbonate and calcium carbonate; silicates such as aluminum silicate, magnesium silicate and aluminum magnesium silicate, aluminum hydroxide, magnesium hydroxide, chromium hydroxide, carbon black, mica, synthetic mica, sericite, talc, kaolin, silicon carbide, barium titanate, barium sulfate, bentonite, smectite, boron nitride, Prussian blue, and ultramarine.

Preferable is metal oxide, and further preferable are titanium oxide and aluminum oxide.
Herein, the inorganic powder encompasses particles of organic substances such as an organic pigment whose surface is covered with the above inorganic compound.
When the inorganic powder is made of a material having no hydroxyl group on the surface thereof, the surface of the inorganic powder can be subjected to a treatment in a plasma atmosphere including oxygen or a corona treatment in advance to thereby have a hydrophilic group introduced thereto. The hydrophilic group is preferably a hydroxyl group (-OH), but may be a functional group having active hydrogen, such as -COOH, -CHO, =NH or $-NH_2$.
In addition, when the inorganic powder does not have active hydrogen on the surface thereof, the surface of the inorganic powder can also be brought into contact with at least one compound selected from $SiCl_4$, $SiHCl_3$, $SiH_2Cl_2$ and $Cl-(SiCl_2O)x-SiCl_3$ (wherein x represents 0 or a natural number) in advance and then subjected to a dehydrochlorination reaction, thereby having a silica ground layer having active hydrogen, formed thereon.
The particle size of the inorganic powder is not particularly restricted, but is 5 nm to 50,000 nm, preferably 10 nm to 50,000 nm, and more preferably 10 nm to 5,000 nm.

2 Preparation of Solution for Forming an Organic Thin Film

The solution for forming an organic thin film for use in the present invention contains

(A) at least one organosilane compound represented by formula (II)

$$R^1Si(OH)_nX^3_{3-n} \qquad (II)$$

(wherein $R^1$ represents an alkyl group having 1 to 30 carbon atoms and optionally having a substituent, $X^3$ represents a hydrolyzable group, and n represents any integer of 1 to 3), and/or
at least one organosilane compound represented by formula (III)

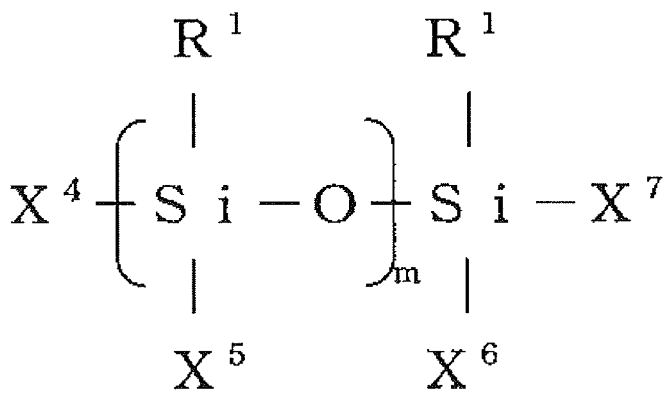

(III)

(wherein each $R^1$ each independently represents the same substituent as in $R^1$ in formula (II), $X^4$, $X^5$, $X^6$ and $X^7$ each independently represent a hydroxyl group or a hydrolyzable group, $X^4$ and $X^7$ may together be an oxygen atom, thereby forming a ring in which Si and an oxygen atom are alternately bound to each other, and m represents any integer of 1 to 3),
(B) water of 10 ppm to a saturating concentration, and
(C) an organic solvent.

The organosilane compound represented by formula (III) corresponds to an oligomer of the organosilane compound represented by formula (II).
The weight ratio of the organosilane compound represented by formula (II) to the organosilane compound represented by formula (III) can be appropriately selected within a range from 100 : 0 to 0 : 100, but is preferably 100 : 0 to 1 : 99.
In addition, the solution for forming an organic thin film may further contain a silanol condensation catalyst.
The content of the organosilane compound represented by formula (II) in the solution for forming an organic thin film is 0.01% by mass or more, preferably 0.01 to 30% by mass, more preferably 0.01 to 10% by mass, and further preferably 0.05 to 10% by mass.
Herein, the presence of an organosilane compound having a different degree of polymerization and the proportion thereof can be determined from, for example, peak positions and the area ratio of peaks observed in GPC (gel permeation chromatography). In addition, the presence of an organosilane compound having a different number of hydroxyl groups and the proportion thereof can be determined from, for example, peak positions and the presence ratio of peaks observed in HPLC (high performance liquid chromatography).
For example, when $R^1$ in the compound represented by formula (II) is an octadecyl group, a standard solution of octadecyltrimethoxysilane can be used to determine the content of the corresponding compound represented by formula (II) from the area ratio of peaks observed in HPLC.
The organosilane compound represented by formula (II) can be used to thereby enhance the reaction rate of the organosilane compound with the inorganic powder, providing an inorganic powder excellent in covering rate with a monolayer. The covering rate of the inorganic powder in this case is 30% or more, more preferably 40% or more, more preferably 50% or more, and particularly preferably 60% or more.
The covering rate can be calculated by thermal analysis measurement of a surface-covered powder.

(1) Organosilane Compound Represented by Formula (II)

The substituent in formula (II) is defined as follows.

The "alkyl group having 1 to 30 carbon atoms" in $R^1$ includes
a methyl group, an ethyl group, a n-propyl group, an isopropyl group, a n-butyl group, an isobutyl group, a sec-butyl group, a t-butyl group, a n-pentyl group, an isopentyl group, a neopentyl group, a t-pentyl group, a n-hexyl group, an isohexyl group, a n-heptyl group, a n-octyl group, a n-decyl group, a n-tetradecyl group, a n-octadecyl group, a n-icosyl group, a n-tetradocosyl group, and a n-octadocosyl group. A linear alkyl group having 1 to 30 carbon atoms is preferable, a linear alkyl group having 6 to 24 carbon atoms is more preferable, and a linear alkyl group having 12 to 24 carbon atoms is particularly preferable.

In "optionally having a substituent", the "substituent" includes
alkoxy groups having 1 to 6 carbon atoms, such as a methoxy group and an ethoxy group;
fluorinated alkyl groups having 1 to 3 carbon atoms, such as $CF_3$ and $C_2F_5$;
fluorinated alkoxy groups having 1 to 3 carbon atoms, such as $CF_3O$ and $C_2F_5O$;
aryl groups such as a phenyl group and a naphthyl group;
aryloxy groups such as a phenoxy group and a naphthoxy group;
alkylthio groups having 1 to 6 carbon atoms, such as a methylthio group and an ethylthio group;
arylthio groups such as a phenylthio group and a naphthylthio group; and
heterocyclic groups such as a pyrrol-2-yl group, an imidazol-2-yl group and a pyrimidin-2-yl group.

The substituent is preferably located at the terminal of $R^1$.

It should be noted that "1 to 30 carbon atoms" in the "alkyl group having 1 to 30 carbon atoms and optionally having a substituent" do not include any carbon atoms in the substituent with respect to "optionally having a substituent".

The hydrolyzable group in $X^3$ is not particularly restricted as long as it reacts with water to be decomposed, but includes an alkoxy group having 1 to 6 carbon atoms; an acyloxy group; and halogen atoms such as F, Cl and Br.

The alkoxy group having 1 to 6 carbon atoms includes a methoxy group, an ethoxy group, a n-propoxy group, an isopropoxy group, a n-butoxy group, a sec-butoxy group, a t-butoxy group, a n-pentyloxy group, and a n-hexyloxy group.

The acyloxy group includes alkylcarbonyloxy groups having 1 to 6 carbon atoms, such as an acetoxy group, a propionyloxy group, a n-propylcarbonyloxy group, an isopropylcarbonyloxy group and a n-butylcarbonyloxy group; arylcarbonyloxy groups such as a benzoyloxy group and a naphthylcarbonyloxy group; and arylalkylcarbonyloxy groups such as a benzylcarbonyloxy group and a phenethylcarbonyloxy group.

Examples of the compound represented by formula (II) include the following.
(when $R^1$ represents an alkyl group having no substituent)
such as
$CH_3Si(OCH_3)(OH)_2$,
$C_2H_5Si(OCH_3)(OH)_2$,
$C_3H_7Si(OCH_3)_2(OH)$,
$C_4H_9Si(OCH_3)_2(OH)$,
$C_4H_9Si(OCH_3)(OH)_2$,
$CH_3(CH_2)_5Si(OCH_3)(OH)_2$,
$CH_3(CH_2)_7Si(OCH_3)(OH)_2$,
$CH_3(CH_2)_9Si(OCH_3)_2(OH)$,
$CH_3(CH_2)_{11}Si(OCH_3)_2(OH)$,
$CH_3(CH_2)_{13}Si(OCH_3)_2(OH)$,
$CH_3(CH_2)_{15}Si(OH_3)_3$,
$CH_3(CH_2)_{17}Si(OCH_3)(OH)_2$,
$CH_3(CH_2)_{17}Si(OCH_3)_2(OH)$,
$CH_3(CH_2)_{19}Si(OCH_3)(OH)_2$,
$CH_3(CH_2)_{21}Si(OCH_3)(OH)_2$,
$CH_3(CH_2)_{17}Si(OH_3)_3$,
$CH_3(CH_2)_5SiCl(OH)_2$,
$CH_3(CH_2)_7SiCl(OH)_2$,
$CH_3(CH_2)_9SiCl_2(OH)$,
$CH_3(CH_2)_{15}Si(OH_3)_3$,
$CH_3(CH_2)_{17}SiCl(OH)_2$,
$CH_3(CH_2)_{17}SiCl_2(OH)$,
$CH_3(CH_2)_{21}SiCl(OH)_2$.
(when $R^1$ represents an alkyl group having a substituent)
such as

$CF_3(CH_2)_{18}Si(OCH_3)_2(OH)$,
$CF_3(CF_2)(CH_2)_{18}Si(OCH_3)_2$ (OH),
$CF_3O$ $(CH_2)_{18}Si$ $(OCH_3)_2$ (OH),
$CF_3(CF_2)O$ $(CH_2)_{18}Si(OCH_3)_2(OH)$,
$CH_3O(CH_2)_{18}Si(OCH_3)_2(OH)$,
$C_2H_5O(CH_2)_{18}Si(OCH_3)_2(OH)$,
$C_6H_5O(CH_2)_{18}Si(OCH_3)_2(OH)$,
$C_6H_5(CH_2)_{18}Si(OCH_3)_2(OH)$,
$CF_3(CH_2)_{18}Si(OCH_3)(OH)_2$,
$CF_3(CF_2)(CH_2)_{18}Si(OCH_3)$ $(OH)_2$,
$CF_3O(CH_2)_{18}Si(OCH_3)(OH)_2$,
$CF_3(CF_2)O(CH_2)_{18}Si(OCH_3)(OH)_2$,
$CH_3O(CH_2)_{18}Si(OCH_3)(OH)_2$,
$C_2H_5O(CH_2)_{18}Si(OCH_3)(OH)_2$,
$C_6H_5O(CH_2)_{18}Si(OCH_3)(OH)_2$,
$C_6H_5(CH_2)_{18}Si(OCH_3)(OH)_2$,
$CF_3(CH_2)_{18}Si(OH)_3$,
$CF_3(CF_2)(CH_2)_{18}Si(OH)_3$,
$CF_{30}(CH_2)_{18}Si(OH)_3$,
$CF_3(CF_2)O(CH_2)_{18}Si(OH)_3$,
$CH_3O(CH_2)_{18}Si(OH)_3$,
$C_2H_5O(CH_2)_{18}Si(OH)_3$,
$C_6H_5O(CH_2)_{18}Si(OH)_3$,
$C_6H_5(CH_2)_{18}Si(OH)_3$.

In addition, these compounds can be used singly or in combination of two or more.

(2) Organosilane Compound Represented by Formula (III)

The substituent in formula (III) is defined as follows.

$R^1$ represents the same substituent as in $R^1$ in formula (II), and each $R^1$ may be the same or different.

The hydrolyzable group in $X^4$, $X^5$, $X^6$ and $X^7$ include the same substituent as in the hydrolyzable group in formula (II)

In addition, the case where $X^4$ and $X^7$ together form an oxygen atom, forming a ring in which Si and an oxygen atom are alternately bound to each other, means, for example, a compound having the following structure.

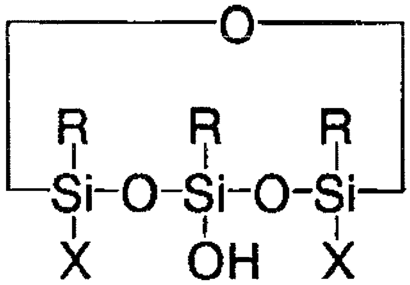

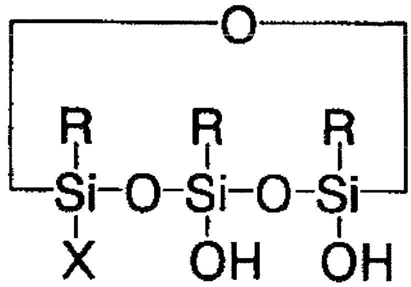

(3) Organic Solvent

The organic solvent for use in the present invention includes an alcohol-based solvent, a hydrocarbon-based solvent, a fluorocarbon-based solvent, and a silicone-based solvent. A hydrocarbon-based solvent, a fluorocarbon-based solvent and a silicone-based solvent are preferable, a hydrocarbon-based solvent is particularly preferable, and a hydrocarbon-based solvent having a boiling point of 100 to 250°C is further preferable.

Specifically, the organic solvent includes hydrocarbon-based solvents such as ethanol, propanol, isopropanol, n-hexane, cyclohexane, benzene, toluene, xylene, petroleum naphtha, solvent naphtha, petroleum ether, petroleum benzine, isoparaffin, normal paraffin, decalin, industrial gasoline, kerosene and ligroin; fluorocarbon-based solvents such as chlorofluorocarbon-based solvents, for example, $CBr_2ClCF_3$, $CClF_2CF_2CCl_3$, $CClF_2CF_2CHFCl$, $CF_3CF_2CHCl_2$, $CF_3CBrFCBrF_2$, $CClF_2CClFCF_2CCl_3$, $Cl(CF_2CFCl)_2Cl$, $Cl$ $(CF_2CFCl)_2CF_2CCl_3$ and $Cl$ $(CF_2CFCl)_3Cl$, Fluorinert (product from 3M) and Afulude (product from Asahi Glass Co., Ltd.); and silicone-based solvents such as dimethyl silicone, phenyl

silicone, alkyl-modified silicone and polyether silicone. These solvents can be used singly or in combination of two or more.

(4) Silanol Condensation Catalyst

The silanol condensation catalyst for use in the present invention is a catalyst having such an action that the catalyst interacts with a hydroxyl group or hydrolyzable group portion of an organosilane compound (compound represented by formula (IV) described later) serving as a raw material of the organosilane compound represented by formula (II) or the organosilane compound represented by formula (III) via a coordination bond, a hydrogen bond, or the like, thereby activating the hydroxyl group or hydrolyzable group to promote hydrolysis and to promote condensation.

As the silanol condensation catalyst in the present invention, a metal oxide, a carboxylic acid metal salt, a carboxylic acid ester metal salt, a carboxylic acid metal salt polymer, a carboxylic acid metal salt chelate, a titanic acid ester, a titanic acid ester chelate, an acid catalyst, metal alkoxides, and partial hydrolysis products of metal alkoxides are preferable, and at least one of metal alkoxides and partial hydrolysis products of metal alkoxides is more preferably used.

The metal oxide is not particularly limited, but an oxide of one metal element selected from the group consisting of titanium, zirconium, aluminum, silicon, germanium, indium, tin, tantalum, zinc, tungsten and lead can be preferably exemplified.

The metal oxide can be used in the state of any of sol, gel, solid and the like. The method for producing gel or sol is not particularly limited, and for example, with respect to silica sol, a method for cation-exchanging a sodium silicate solution, and a method for hydrolyzing a silicon alkoxide can be exemplified. In particular, sol stably dispersed in an organic solvent is preferable, and in addition, sol preferably having a particle size in a range from 10 to 100 nm, further preferably from 10 to 20 nm is preferable. The shape of sol is not particularly limited, and sol having any shape such as a spherical shape or an elongated shape can be used.

Specifically, Methanol Silica Sol, IPA-ST, IPA-ST-UP, IPA-ST-ZL, NPC-ST-30, DMAC-ST, MEK-ST, MIBK-ST, XBA-ST and PMA-ST (all are trade names of organosilica sols produced by Nissan Chemical Industries Ltd.) can be exemplified.

As the carboxylic acid metal salt, the carboxylic acid ester metal salt, the carboxylic acid metal salt polymer, the carboxylic acid metal salt chelate, the titanic acid ester or the titanic acid ester chelate, the following can be exemplified.

Stannous acetate, dibutyltin dilaurate, dibutyltin dioctate, dibutyltin diacetate, dioctyltin dilaurate, dioctyltin dioctate, dioctyltin diacetate, stannous dioctoate, lead naphthenate, cobalt naphthenate, iron 2-ethylhexenoate, a dioctyltin bisoctylthioglycolic acid ester salt, a dioctyltin maleic acid ester salt, a dibutyltin maleic acid salt polymer, a dimethyltin mercaptopropionic acid salt polymer, dibutyltin bisacetylacetate, dioctyltin bisacetyllaurate, titanium tetraethoxide, titanium tetrabutoxide, titanium tetraisopropoxide, and titanium bis(acetylacetonyl)dipropoxide.

As the acid catalyst, mineral acids such as hydrochloric acid, nitric acid, boric acid and fluoroboric acid; carbonic acid; organic acids such as acetic acid, formic acid, oxalic acid, trifluoroacetic acid, p-toluenesulfonic acid and methanesulfonic acid; preferably solid acids such as an acid having pKa $\leq 0$, a perfluorosulfonic acid/PTFE copolymer ($H^+$ type) (for example, Nafion NR50 (R) produced by Du Pont) and polystyrenesulfonic acid (for example, Amberlyst 15 (R) produced by Rohm and Haas Company); and also photoacid generators that generate an acid by light irradiation, specifically, diphenyliodonium hexafluorophosphate and triphenylphosphonium hexafluorophosphate can be exemplified.

The metal alkoxides are not particularly limited, but are preferably alkoxides of at least one metal element selected from the group consisting of titanium, zirconium, aluminum, silicon, germanium, indium, tin, tantalum, zinc, tungsten and lead for the reason that an organic thin film excellent in transparency can be obtained.

The number of carbon atoms of the alkoxy group in the metal alkoxides is not particularly limited, but an alkoxy group having 1 to 4 carbon atoms is preferable in terms of the concentration of the oxide contained, ease of leaving of an organic substance, availability, and the like.

Specific examples of the metal alkoxides for use in the present invention include silicon alkoxides such as $Si(OCH_3)_4$, $Si(OC_2H_5)_4$, $Si(OC_3H_7\text{-}i)_4$ and $Si(OC_4H_9\text{-}t)_4$; titanium alkoxides such as $Ti(OCH_3)_4$, $Ti(OC_2H_5)_4$, $Ti (OC_3H_7\text{-}i)_4$ and $Ti(OC_4H_9)_4$; tetrakis(trialkylsiloxy)titanium such as $Ti[OSi(CH_3)_3]_4$ and $Ti[OSi(C_2H_5)_3]_4$; zirconium alkoxides such as $Zr(OCH_3)_4$, $Zr(OC_2H_5)_4$, $Zr(OC_3H_7)_4$ and $Zr(OC_4H_9)_4$; aluminum alkoxides such as $Al(OCH_3)_3$, $Al(OC_2H_5)3$, $Al(OC_3H_7\text{-}i)_3$ and $Al(OC_4H_9)_3$; germanium alkoxides such as $Ge(OC_2H_5)_4$; indium alkoxides such as $In(OCH_3)_3$, $In(OC_2H_5)_3$, In $(OC_3H_{7\text{-}i})_3$ and $In(OC_4H_9)_3$; tin alkoxides such as $Sn(OCH_3)4$, $Sn(OC_2H_5)_4$, $Sn(OC_3H_7\text{-}i)_4$ and $Sn(OC_4H_9)_4$; tantalum alkoxides such as $Ta(OCH_3)_5$, $Ta(OC_2H_5)_5$, $Ta(OC_3H_7\text{-}i)_5$ and $Ta(OC_4H_9)_5$; tungsten alkoxides such as $W(OCH_3)_6$, $W(OC_2H_5)_6$, $W(OC_3H_7\text{-}i)_6$ and $W(OC_4H_9)_6$; zinc alkoxides such as $Zn(OC_2H_5)_2$; and lead alkoxides such as $Pb(OC_4H_9)_4$. These metal alkoxides can be used singly or in combination of two or more.

In the present invention, a composite alkoxide obtained by reacting two or more metal alkoxides, a composite alkoxide obtained by reacting one or more metal alkoxides with one or more metal salts, and a combination thereof can also be used as the metal alkoxide.

As the composite alkoxide obtained by reacting two or more metal alkoxides, a composite alkoxide obtained by reacting an alkoxide of an alkali metal element or an alkali earth metal element with an alkoxide of a transition metal element, and a composite alkoxide obtained as the form of a complex salt by a combination of Group 3B elements can be exemplified.

Specific examples thereof include $BaTi(OR)_6$, $SrTi(OR)_6$, $BaZr(OR)_6$, $SrZr(OR)_6$, $LiNb(OR)_6$, $LiTa(OR)_6$, and combinations thereof, as well as reaction products of a silicon alkoxide with the metal alkoxides and polycondensation products thereof, such as $LiVO(OR)_4$, $MgAl_2(OR)_8$, $(RO)_3SiOAl(OR')_2$, $(RO)_3SiOTi(OR')_3$, $(RO)_3SiOZr(OR')_3$, $(RO)_3SiOB(OR')_2$, $(RO)_3SiONb(OR')_4$ and $(RO)_3SiOTa(OR')_4$. Herein, R and R' represent an alkyl group or the like.

As the composite alkoxide obtained by reacting one or more metal alkoxides with one or more metal salts, a compound obtained by reacting a metal salt with a metal alkoxide can be exemplified.

As the metal salt and the metal alkoxide, chloride, nitride, sulfate, acetate, formate and oxalate, and the same alkoxides as the above-described metal alkoxides can be exemplified, respectively.

The partial hydrolysis product of the metal alkoxides is one obtained before the metal alkoxides are completely hydrolyzed, and is present in the state of an oligomer.

As the method for producing the partial hydrolysis product of the metal alkoxide, a method including using water in an amount of less than 0.5 to 2.0-fold mol relative to the amount of the above-exemplified metal alkoxide in an organic solvent to hydrolyze the metal alkoxides in a range from -100°C to the reflux temperature of the organic solvent can be preferably exemplified.

Specifically,

(i) a method of adding water in an amount of less than 0.5 to 1.0-fold mol relative to the amount of the metal alkoxides in an organic solvent,

(ii) a method of adding water in an amount of less than 1.0 to 2.0-fold mol relative to the amount of the metal alkoxides in an organic solvent at a temperature equal to or lower than the hydrolysis starting temperature, preferably at 0°C or lower, more preferably in a range from -20 to -100°C, and

(iii) a method of adding water in an amount of less than 0.5 to 2.0-fold mol relative to the amount of the metal alkoxides in an organic solvent at room temperature while the hydrolysis speed is controlled by a method of controlling the speed of water added, a method of using an aqueous solution obtained by adding a water-soluble solvent to water to lower the concentration of water, or the like

can be exemplified.

In the method (i), after a predetermined amount of water is added at an arbitrary temperature, water can also be further added at a temperature equal to or lower than the hydrolysis starting temperature, preferably at -20°C or lower, for reaction.

The reaction of the metal alkoxides with water can also be performed by directly mixing the metal alkoxides with water without using an organic solvent, but is preferably performed in an organic solvent. Specifically, the reaction can be performed by any of a method of adding water diluted with an organic solvent to a solution of the metal alkoxides in an organic solvent; and a method of adding the metal alkoxides or a solution thereof in an organic solvent into an organic solvent in which water is suspended or dissolved, but the former method of adding water later is preferable.

The concentration of the metal alkoxides in the organic solvent is not particularly limited as long as rapid heat generation is suppressed and such fluidity that allows stirring is exhibited, but is usually in a range from 5 to 30% by weight.

The reaction temperature of the metal alkoxides with water in the method (i) is not particularly restricted, and is usually in a range from -100 to +100 °C, preferably in a range from -20°C to the boiling point of the organic solvent used or an alcohol to be eliminated by hydrolysis.

The temperature at which water is added in the method (ii) depends on the stability of the metal alkoxides, and is not particularly limited as long as the temperature is equal to or lower than the hydrolysis starting temperature, or 0°C or lower, but the addition of water to the metal alkoxides is preferably performed at a temperature in a range from -50°C to -100°C depending on the type of the metal alkoxides. In addition, the reaction can also be performed by adding water at a low temperature, aging the resultant for a certain period of time, then hydrolyzing it at a temperature in a range from room temperature to the reflux temperature of the solvent used, and further performing a dehydration condensation reaction.

The reaction of the metal alkoxides with water in the method (iii) can be performed in a temperature range in which cooling can be performed even without using a special cooling apparatus, for example, in a range from 0°C to room temperature by controlling the hydrolysis speed by a method other than temperature control, such as control of the speed of water added. The reaction can also be performed by aging for a certain period of time, then hydrolyzing at a temperature in a range from room temperature to the reflux temperature of the solvent used, and further performing a dehydration condensation reaction.

The organic solvent used is preferably an organic solvent in which the hydrolysis product of the metal alkoxides

can be dispersed as dispersoid, and more preferably a solvent that has a high solubility of water and that is not solidified at a low temperature because such a solvent can allow a reaction in which a metal-based surfactant is treated with water to be performed at a low temperature.

Specific examples of the organic solvent used include alcohol-based solvents such as methanol, ethanol and isopropanol; halogenated hydrocarbon-based solvents such as methylene chloride, chloroform and chlorobenzene; hydrocarbon-based solvents such as hexane, cyclohexane, benzene, toluene and xylene; ether-based solvents such as tetrahydrofuran, diethyl ether and dioxane; ketone-based solvents such as acetone, methyl ethyl ketone and methyl isobutyl ketone; amide-based solvents such as dimethylformamide and N-methylpyrrolidone; sulfoxide-based solvents such as dimethylsulfoxide; and silicones such as methylpolysiloxane, octamethylcyclotetrasiloxane, decamethylcyclopentanesiloxane and methylphenylpolysiloxane (Japanese unexamined Patent Application Publication No. 9-208438 and the like).

These solvents can be used singly or as a mixture of two or more.

When a mixed solvent is used, a combination of a hydrocarbon-based solvent such as toluene or xylene with a lower alcohol-based solvent such as methanol, ethanol, isopropanol or t-butanol is preferable. As the lower alcohol-based solvent in this case, a secondary or higher alcohol-based solvent such as isopropanol or t-butanol is more preferable. The mixing ratio in the mixed solvent is not particularly restricted, but the ratio of the hydrocarbon-based solvent to the lower alcohol-based solvent in a volume ratio is preferably used in a range from 99/1 to 50/50.

Water used is not particularly limited as long as it is neutral, but pure water, distilled water or ionexchange water is preferably used from the viewpoints of including few impurities and providing a dense organic thin film.

The amount of water used is less than 0.5 to 2.0-fold mol relative to 1 mol of the metal alkoxides.

In a partial hydrolysis reaction of the metal alkoxides by water, an acid, a base or a dispersion stabilizer may be added. The acid and the base are not particularly restricted as long as they function as a deflocculant for re-dispersing a precipitate formed by coagulation, as a catalyst for hydrolyzing and dehydration-condensing the metal alkoxides to produce dispersoid of colloidal particles or the like, and as a disperser of the dispersoid produced.

The acid used includes mineral acids such as hydrochloric acid, nitric acid, boric acid and fluoroboric acid; carbonic acid; organic acids such as acetic acid, formic acid, oxalic acid, trifluoroacetic acid, p-toluenesulfonic acid and methanesulfonic acid; and photoacid generators that generate an acid by light irradiation, such as diphenyliodonium hexafluorophosphate and triphenylphosphonium hexafluorophosphate.

The base used includes triethanolamine, triethylamine, 1,8-diazabicyclo[5.4.0]-7-undecene, ammonia, dimethylformamide, and phosphine.

The dispersion stabilizer is an agent having an effect of allowing the dispersoid to be stably dispersed in a dispersion medium, and includes coagulation inhibitors such as a deflocculant, a protective colloid and a surfactant. Specifically, polyvalent carboxylic acids such as glycolic acid, gluconic acid, lactic acid, tartaric acid, citric acid, malic acid and succinic acid; hydroxycarboxylic acid; phosphoric acids such as pyrophosphoric acid and tripolyphosphoric acid; multidentate ligand compounds having a strong chelating ability to a metal atom, such as acetylacetone, methyl acetoacetate, ethyl acetoacetate, n-propyl acetoacetate, isopropyl acetoacetate, n-butyl acetoacetate, sec-butyl acetoacetate, t-butyl acetoacetate, 2,4-hexane-dione, 2,4-heptane-dione, 3,5-heptane-dione, 2,4-octane-dione, 2,4-nonane-dione and 5-methyl-hexanedione; aliphatic amine-based and hydrostearic acid-based polyesteramines such as Solsperse 3000, 9000, 17000, 20000 and 24000 (all are produced by Zeneca Inc.), and Disperbyk-161, -162, -163 and -164 (all are produced by BYK-Chemie GmbH); and silicone compounds such as a dimethylpolysiloxane-methyl(polysiloxyalkylene)siloxane copolymer, trimethylsiloxysilicic acid, a carboxy-modified silicone oil and an amine-modified silicone (for example, Japanese unexamined Patent Application Publication No. 9-208438 and Japanese unexamined Patent Application Publication No. 2000-53421) are exemplified.

The partial hydrolysis product obtained as described above serves as dispersoid that has such a property as to be stably dispersed without aggregating in the organic solvent in the absence of the acid, base and/or dispersion stabilizer. The dispersoid in this case means fine particles dispersed in a dispersion system, and colloidal particles can be specifically exemplified.

Herein, the state of being stably dispersed without aggregating means a state where the dispersoid of the hydrolysis product is not coagulated and heterogeneously separated in the organic solvent in the absence of the acid, base and/or dispersion stabilizer, and preferably means a transparent and homogeneous state.

In addition, the term "transparent" means a state where the transmittance of visible light is high, and specifically means a state where a transmittance of 80 to 100% is preferably exhibited when expressed as the spectral transmittance measured under conditions of a concentration of the dispersoid of 0.5% by mass in terms of oxide, an optical path length of a quartz cell of 1 cm, use of an organic solvent as a control specimen and a wavelength of light of 550 nm.

The particle size of the dispersoid of the partial hydrolysis product is not particularly limited, but is usually in a range from 1 to 100 nm, preferably in a range from 1 to 50 nm, and more preferably in a range from 1 to 10 nm, in order to achieve a high transmittance of visible light.

The amount of the silanol condensation catalyst used is not particularly restricted as long as it does not have

any effect on physical properties of an organic thin film to be formed, but is usually 0.0001 to 1 mol and preferably 0.0001 to 0.2 mol relative to 1 mol of the organosilane compound in terms of number of moles of the oxide.

(4) Preparation Method of Solution for Forming an Organic Thin Film

The solution for forming an organic thin film in the present invention can be produced by, for example, any of the following methods.

1) Production Method 1

Production Method 1 is a method for forming an organic thin film, including bringing a solution for forming an organic thin film, obtained by mixing an organosilane compound represented by formula (IV)

$$R^2SiX^8{}_3 \qquad \text{(IV)}$$

(wherein $R^2$ represents the same substituent as in $R^1$ in formula (II) and $X^8$ represents a hydroxyl group or a hydrolyzable group) with the silanol condensation catalyst, into contact with a substrate in an organic solvent, thereby forming an organic thin film on the surface of the substrate.

The organosilane compound is hydrolyzed and/or condensed by the silanol condensation catalyst to form the organosilane compound represented by formula (II) and optionally form the organosilane compound represented by formula (III).

Specific examples of the organosilane compound represented by formula (IV) include the following.

(examples of a compound wherein $R^2$ represents an unsubstituted alkyl group and $X^8$ represents a hydrolyzable group) such as

$CH_3Si(OCH_3)_3$,
$C_2H_5Si(OCH_3)_3$,
$C_3H_7Si(OCH_3)_3$,
$C_4H_9Si(OCH_3)$,
$CH_3(CH_2)_5Si(OCH_3)_3$,
$CH_3(CH_2)_7Si(OCH_3)_3$,
$CH_3(CH_2)_9Si(OCH_3)_3$,
$CH_3(CH_2)_{11}Si(OCH_3)_3$,
$CH_3(CH_2)_{13}Si(OCH_3)_3$,
$CH_3(CH_2)_{15}Si(OCH_3)_3$,
$CH_3(CH_2)_{17}Si(OCH_3)_3$,
$CH_3(CH_2)_{19}Si(OCH_3)_3$,
$CH_3(CH_2)_{21}Si(OCH_3)_3$,
$CH_3(CH_2)_9Si(OCH_2CH_3)_3$,
$CH_3(CH_2)_{17}Si(OCH_2CH_3)_3$,
$CH_3(CH_2)_9SiCl_3$,
$CH_3(CH_2)_{17}SiCl_3$,
$CH_3(CH_2)_{21}SiCl_3$.

(examples of a compound wherein $R^2$ has a substituent and $X^8$ represents a hydrolyzable group) such as

$CF_3(CH_2)_{18}Si(OCH_3)3$,
$CF_3(CF_2)(CH_2)_{18}Si(OCH_3)3$,
$CF_3O(CH_2)_{18}Si(OCH_3)_3$,
$CF_3(CF_2)O(CH_2)_{18}Si(OCH_3)_3$,
$CH_3O(CH_2)_{18}Si(OCH_3)_3$,
$C_2H_5O(CH_2)_{18}Si(OCH_3)_3$,
$C_6H_5O(CH_2)_{18}Si(OCH_3)_3$,
$C_6H_5(CH_2)_{18}Si(OCH_3)_3$,
$CF_3(CH_2)_{18}Si(Cl_3)$ 3,
$CF_3(CF_2)(CH_2)_{18}Si(Cl_3)$ 3,
$CF_3O(CH_2)_{18}Si(Cl_3)$ $_3$,
$CF_3(CF_2)O(CH_2)_{18}Si(Cl_3)_3$,
$CH_3O(CH_2)_{18}Si(Cl_3)_3$,
$C_2H_5O(CH_2)_{18}Si(Cl_3)_3$,

$C_6H_5O(CH_2)_{18}Si(Cl_3)_3$,
$C_6H_5(CH_2)_{18}Si(Cl_3)_3$.

The organosilane compound represented by formula (IV) is preferably octadecyltrimethoxysilane or the like.

The solution for forming an organic thin film contains a predetermined amount of moisture, and the content of moisture is determined depending on the types of the inorganic powder, the organosilane compound, the silanol condensation catalyst, the organic solvent and the like. Specifically, the content is determined in a range such that chemical adsorption to the inorganic powder is not inhibited, a dense monolayer can be produced, the amount of the organosilane compound represented by formula (IV) lost is small and the catalyst is not deactivated, and in a sufficient amount or more for promoting and activating film formation.

The sufficient amount for promoting and activating organic thin film formation means such an amount that a dense and homogeneous organic thin film can be formed on the entire surface of the inorganic powder at one time within a contact time of 10 minutes or less, preferably 5 minutes or less when the solution is brought into contact with the substrate by a dipping method, for example.

The content of moisture is preferably in a range from 10 ppm or more to the saturated moisture amount of the organic solvent. Since the saturated moisture amount is different depending on the solvent, the range thereof is appropriately determined depending on the solvent used.

The moisture amount indicated here indicates a value measured by collecting a part of the solution for forming an organic thin film and subjecting it to the Karl Fischer method, and the measurement apparatus therefor is not particularly limited as long as the value is measured by an apparatus using such a methodology. When the solution for forming an organic thin film is uniform, a value obtained by partially collecting such a uniform solution and subjecting it to the measurement is adopted, when the solution for forming an organic thin film is made of two layers, an organic solvent layer and a moisture layer, a value obtained by partially collecting the organic solvent layer and subjecting it to the measurement is adopted, and when the moisture layer is dispersed in the organic solvent and cannot be separated, a value obtained by collecting the dispersion solution as it is and subjecting it to the measurement is adopted.

As the method for setting the content of moisture in the solution for forming an organic thin film within a predetermined range, specifically,

(a) a method of bringing moisture into contact with the solution for forming an organic thin film to provide a water layer,
(b) a method of allowing a water-retentive substance containing water to coexist with the solution for forming an organic thin film,
(c) a method of bringing the solution for forming an organic thin film into contact with a gas containing moisture, and
(d) a method of appropriately adding water and the like can be exemplified.

These methods can be used singly or in combination of two or more.

In the methods (a) to (d), water used is not particularly restricted as long as it is neutral, but pure water or distilled water is preferably used. In addition, the organic solvent used may be anhydrous or may contain a certain amount of moisture in advance.

2) Production Method 2

When the silanol condensation catalyst used is an acid catalyst, the solution for forming an organic thin film may be obtained by subjecting the organosilane compound represented by formula (IV) to a hydrolysis and condensation reaction in an aliphatic ether-based solvent or an aliphatic ketone-based solvent in the presence of water and an acid, and diluting the resulting solution with an organic solvent.

The amount of water for use in the hydrolysis and condensation reaction is 0.1 to 20 mol, preferably 0.5 mol to 6 mol, and further preferably 1 to 4 mol relative to 1 mol of the organosilane compound represented by formula (IV).

In the hydrolysis and condensation reaction, the reaction temperature is in a range from 0°C to the boiling point of the solvent, and the reaction time is in a range from 1 hour to 100 days.

The amount of the acid, as the silanol condensation catalyst, used is 0.01 mmol to 1 mol relative to 1 mol of the organosilane compound represented by formula (IV) when the acid is a mineral acid or an organic acid, and the amount used is 0.05 to 20% by mass relative to that of the organosilane compound represented by formula (IV) when the acid is a solid acid.

As the aliphatic ether-based solvent or the aliphatic ketone-based solvent for use in the hydrolysis and condensation reaction, an aliphatic ether such as tetrahydrofuran, tetrahydropyran, cyclopentyl methyl ether or 1,2-diethoxyethane, or an aliphatic ketone such as methyl isobutyl ketone is preferable. Among them, an alicyclic ether is preferable, and in particular, tetrahydrofuran or tetrahydropyran is preferable.

The organic solvent for dilution is preferably a hydrocarbon-based solvent, a fluorocarbon-based solvent or a silicone-based solvent.

3) Production Method 3

Production Method 3 is a method of obtaining a solution for forming an organic thin film by producing an aid for forming an organic thin film in first step, and mixing the aid for forming an organic thin film with the organosilane compound represented by formula (IV) in second step.

First Step: Preparation of Aid for Forming an Organic Thin Film

The aid for forming an organic thin film can be obtained by reacting the organosilane compound represented by formula (IV) with the silanol condensation catalyst.

More specifically, the aid for forming an organic thin film can be prepared by treating the organosilane compound represented by formula (IV) with water in the presence of the catalyst in an organic solvent.

In the present invention, the organosilane compound represented by formula (IV) is contained in the aid for forming an organic thin film in a range from 0.5 to 8.0 mol, more preferably from 1.5 to 5.0 mol relative to 1 mol of the catalyst.

The method of treating the organosilane compound represented by formula (IV) with water in the presence of the catalyst in an organic solvent includes a method of adding water to a solution containing the organosilane compound represented by formula (IV) and the catalyst in an organic solvent.

The amount of water used is 0.01 to 5.0 mol and preferably 0.1 to 2.0 mol relative to 1 mol of the organosilane compound represented by formula (IV).

As the organic solvent for use in preparation of the aid for forming an organic thin film, the above organic solvent is used.

The reaction temperature is 0 to 100°C and preferably 20°C to 70°C. The reaction time for adjusting the aid for forming an organic thin film is 1 hour to 10 days and preferably 1 hour to 3 days.

Second Step: Preparation of Solution for Forming an Organic Thin Film

In second step, the solution for forming an organic thin film is produced by stirring a mixture of the organosilane compound represented by formula (IV), an organic solvent, the aid for forming an organic thin film and if desired, water.

The organosilane compound represented by formula (IV) may be the same as or different from one for use in producing the aid for forming an organic thin film.

The amount of the aid for forming an organic thin film for use in preparation of the solution for forming an organic thin film in the present invention is not particularly restricted as long as it is such an amount that does not have any effect on physical properties of an organic thin film to be formed, but is usually 0.001 to 1 mol and preferably 0.001 to 0.2 mol relative to 1 mol of the organosilane compound represented by formula (IV) to be newly mixed, in terms of oxide.

More specifically, the solution for forming an organic thin film in the present invention includes (a) a method of adding water to a solution containing the aid for forming an organic thin film and the organosilane compound represented by formula (IV) in an organic solvent, and (b) a method of adding the aid for forming an organic thin film to a mixed solution of the organosilane compound represented by formula (IV) with water.

As the organic solvent, the same solvent as the organic solvent for use in preparation of the aid for forming an organic thin film is used.

The stirring temperature of the mixture of the organosilane compound represented by formula (IV), the organic solvent, the aid for forming an organic thin film and water is usually 0°C to 100°C and preferably 20°C to 70°C. The stirring time is usually several minutes to several hours.

In this case, in order to obtain a uniform solution for forming an organic thin film, it is also preferable to subject an ultrasonic treatment.

Although precipitates including a metal oxide and the like may be generated in the prepared solution for forming an organic thin film, impurities such as these precipitates are preferably removed at this stage in order that a dense monomolecular organic thin film without impurities is obtained. The precipitates can be easily removed by operations including filtration, decanting and the like.

The content of moisture in the solution for forming an organic thin film is in a range from 10 ppm to a saturating concentration in the organic solvent, preferably from 50 to 3000 ppm, more preferably from 50 to 1000 ppm, and further preferably from 100 to 1000 ppm.

The method of adjusting or maintaining the content of moisture in the solution for forming an organic thin film within a predetermined range include (i) a method of bringing moisture into contact with the solution for forming an organic thin film to provide a water layer, (ii) a method of allowing a water-retentive substance containing moisture to coexist with the solution for forming an organic thin film, and (iii) a method of blowing a gas containing moisture.

4) Production Method 4

In second step of Production Method 3, when the mixture of the organosilane compound represented by formula (IV), an organic solvent, the aid for forming an organic thin film and if desired, water is stirred, (a) the organosilane compound represented by formula (IV) used in production of the aid for forming an organic thin film and (b) the organosilane compound represented by formula (IV) to be newly added in second step may be mixed so that the total amount of (a) and (b) is 0.1% by weight to 80% by weight, preferably 0.5 to 50% by weight, to prepare a hydroxyl group-containing solution, and the solution may be diluted with the above organic solvent to provide a final solution for forming an organic thin film.

The ratio of (a) the organosilane compound represented by formula (IV) used in production of the aid for forming an organic thin film to (b) the organosilane compound represented by formula (IV) to be newly added in second step, to be used at the time of production of a hydroxyl group-containing solution, is 1 : 10 to 50,000 and preferably 1 : 150 to 20,000 in a weight ratio, the stirring temperature is 0°C to 100°C and preferably 20°C to 70°C, and the stirring time is 1 hour to 100 days and preferably 1 hour to 14 days. The dilution rate when the hydroxyl group-containing solution is diluted with the organic solvent is 1.0 to 200-fold, preferably 1.5 to 200-fold, further preferably 1.5 to 100-fold, and further preferably 1.5 to 50-fold. Other conditions for producing the hydroxyl group-containing solution can be the same as the conditions for producing the aid for forming an organic thin film.

In particular, the solutions for forming an organic thin film produced in Production Methods 3 and 4, in the present invention, are each a solution suitable for providing an inorganic powder excellent in covering rate with a monolayer.

3 Formation of Organic Thin Film on Inorganic Powder Surface

The solution for forming an organic thin film, obtained as described above, is brought into contact with the inorganic powder to thereby provide an inorganic powder covered with a monolayer formed by at least one structural unit represented by formula (I)

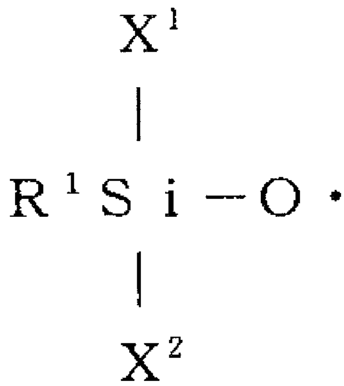

(I)

(wherein $R^1$ represents an alkyl group having 1 to 30 carbon atoms and optionally having a substituent, $X^1$ and $X^2$ each independently represent a hydroxyl group, or an $OR^2$ or O-Si bond, and • represents a binding site to an atom on the inorganic powder side),
wherein the monolayer is at least partially crystalline.

It should be noted that an oxygen atom of O• in formula (I) may be an oxygen atom from the inorganic powder, or may be, for example, an oxygen atom from the organosilane compound represented by formula (II) or formula (III).

The "inorganic powder covered with a monolayer" means an inorganic powder at least partially covered, and the covering rate of the inorganic powder is preferably 30% or more, more preferably 40% or more, more preferably 50% or more, and particularly preferably 60% or more.

The covering rate can be calculated by thermal analysis measurement of a surface-covered powder.

In addition, the "inorganic powder wherein the monolayer is at least partially crystalline" means that the monolayer that covers the inorganic powder has at least partial crystallinity, and preferably the monolayer is entirely crystalline.

In the method for forming an organic thin film of the present invention, the content of moisture in the solution for forming an organic thin film is kept within a predetermined range, and the amount of moisture in the solution for forming an organic thin film is kept in a range from 10 ppm to a saturating concentration, preferably from 50 to 3000 ppm, more preferably from 50 to 1000 ppm, and further preferably from 100 to 1000 ppm.

The method of bringing the solution for forming an organic thin film in the present invention into contact with

the inorganic powder surface is not particularly restricted, and a known method can be used therefor. Specifically, the method includes a dipping method and a spray method, and among them, a dipping method is preferable.

The temperature at which the solution for forming an organic thin film in the present invention is brought into contact with the inorganic powder surface is not particularly restricted as long as the solution in the present invention can hold stability. The temperature can be usually in a range from room temperature to the reflux temperature of the solvent used for preparation of the solution, preferably 15°C to 100°C, and more preferably 15°C to 70°C. In order to allow the temperature to be a temperature suitable for contacting, the solution in the present invention may be heated or the inorganic powder itself may be heated.

In order to promote film formation, ultrasonic wave can also be used. The step of bringing into contact with the inorganic powder surface may be performed at one time for a long period of time, or contacting for a short period of time may be performed several times.

After the solution for forming an organic thin film in the present invention is brought into contact with the inorganic powder surface, a washing step can also be provided in order to remove excessive reagents, impurities and the like attached to the film surface. The washing step can be provided to thereby further control the film thickness. The washing method is not particularly restricted as long as it can remove objects attached to the surface. Specifically, the method includes a method of immersing the substrate in a solvent capable of dissolving the organosilane compound represented by formula (IV) used; a method of leaving to stand in vacuum or in air under ordinary pressure for evaporation; and a method of blowing an inert gas such as dry nitrogen gas for blowing off.

After the solution for forming an organic thin film in the present invention is brought into contact with the inorganic powder surface and/or the surface is washed, the inorganic powder is preferably heated in order to stabilize the film formed on the inorganic powder surface. The heating temperature can be appropriately selected depending on the inorganic powder, the stability of the organic thin film formed, and the like.

The solution for forming an organic thin film in the present invention is brought into contact with the inorganic powder surface, to thereby allow the organosilane compounds represented by formula (II) and formula (III) in the solution to adsorb to the inorganic powder surface, forming a thin film. The detail of a mechanism where the organosilane compounds represented by formula (II) and formula (III) adsorb to the inorganic powder surface is not clear, but it can be considered as follows in the case of the inorganic powder having active hydrogen on the surface thereof. That is, in the solution for forming an organic thin film, hydroxyl groups of the organosilane compounds represented by formula (II) and formula (III) react with active hydrogen on the inorganic powder surface, to allow a thin film, in which a strong chemical bond together with the substrate is formed, to be formed. This thin film is formed by the reaction of the hydroxyl groups with active hydrogen of the substrate, and is formed into a monolayer.

The monolayer formed by the method for forming an organic thin film of the present invention is at least partially a crystalline film. The fact that the monolayer is crystalline can be confirmed by measuring the monolayer using a thin film X-ray diffraction apparatus or an IR analysis apparatus.

The film thickness of the monolayer formed by the method for forming an organic thin film of the present invention is a thickness substantially equal to the chain length of the substituent $R^1$ of the organosilane compound used.

The monolayer formed by the method for forming an organic thin film of the present invention is a chemical adsorption film, and a monolayer by a covalent bond via a metal-oxygen bond can be exemplified as the chemical adsorption film.

The monolayer formed by the method for forming an organic thin film of the present invention is preferably a self-assembly monolayer. The self-assembly monolayer here means a film in which a structure well-ordered with no external forcing is formed. Molecules for forming the self-assembly monolayer are obtained from the organosilane compounds represented by formula (II) and formula (III). The molecules of the organosilane compounds represented by formula (II) and formula (III) are not present singly with being solvated by a solvent in a solution for forming a self-assembly monolayer, but assembled by several molecules to form an assembled object.

The form of the assembled object is a form in which molecules are assembled by an intermolecular force, a coordination bond, a hydrogen bond or the like between hydrophobic portions or hydrophilic portions; a form in which molecules for film formation are bound and assembled by a covalent bond; a form in which micelle or the like is formed using other medium such as water as a nuclear or an intermedium; a combination thereof; or the like.

The shape of the assembled object is not particularly limited, and may be any of a spherical shape, a chain shape, a band shape, and the like.

In addition, the value of the zeta potential (electrokinetic potential) of the assembled object is preferably larger than the zeta potential value of the substrate in the same solvent. It is particularly preferable that the zeta potential of the assembled object be positive and the zeta potential of the substrate be negative. When a solution for forming a self-assembly monolayer that forms an assembled object having such a zeta potential value is used, a dense monolayer having crystallinity can be produced.

## Examples

Hereinafter, the present invention will be described in more detail with reference to examples, but the present invention is not to be limited by the following examples.

(1) Preparation of Solution for Forming an Organic Thin Film

1) Preparation of Solution for Forming an Organic Thin Film (1)

A 200 ml four-necked flask was charged with 16.1 g (43.0 mmol) of octadecyltrimethoxysilane (produced by Gelest Inc.: purity: 95%, hereinafter, also referred to as ODS) at room temperature, 4.6 g (16.4 mmol) of tetraisopropoxy titanium (produced by Nippon Soda Co., Ltd.) was added thereto, and 77.6 g of toluene was added thereto.

To this solution was added 1.7 g of distilled water, and allowed to react at room temperature for 24 hours, providing solution A.

Then, a 1000 ml four-necked flask was charged with 78.9 g (200 mmol) of ODS at room temperature, 0.16 g of solution A was added thereto, and 419 g of toluene was added thereto for dilution.

To this solution was added 3.7 g of distilled water, and allowed to react at room temperature for 10 days, providing solution B.

The results of GPC analysis of solution B were as follows: monomer: 58.6%; dimer: 3.7%; trimer: 3.3%; and tetramer: 34.4% (relative area ratio).

Thereafter, a 1000 mL four-necked flask was charged with 20 g of solution B at room temperature, and 480 g of toluene was added thereto for dilution, providing solution for forming an organic thin film (1). The result of HPLC analysis of solution (1) was as follows: the hydrolysate of the monomer (corresponding to formula (II)) in the solution for forming an organic thin film: 0.07%.

2) Adjustment of Solution for Forming an Organic Thin Film (2)

A 1000 ml four-necked flask was charged with 80 g (0.20 mol) of ODS (produced by Gelest Inc.: purity: 95%), 410 g of THF and 0.53 g (0.5 mol) of pure water at room temperature for dissolving.

To the solution was added 1.0 g of a solid acid catalyst (Nafion) and stirred, and allowed to react at room temperature for 2 days, providing solution C. The results of GPC analysis of solution C were as follows: monomer: 6.3%; dimer: 41.1%; trimer: 39.7%; and tetramer or higher: 12.9% (relative area ratio). The result of HPLC analysis of solution C was as follows: the hydrolysate of the monomer (corresponding to formula (II)) in the solution for forming an organic thin film: 0.1%.

(2) Production of Surface-Covered Powder

1) Production of Surface-Covered Powder (Production 1)

A powder made of each of inorganic powders listed in Table 1 was treated using solution for forming an organic thin film (1) prepared above in the following manner, providing each of surface-covered powders E-1 to E-4.

A 900 mL mayonnaise bottle was charged with 100 g of each powder and 400 g of solution for forming an organic thin film (1), and the slurry concentration of the powder was set to 20% by weight. Then, a stirrer chip was put to the mayonnaise bottle, and the content of the bottle was stirred by a magnetic stirrer under room temperature at 400 r.p.m. for 3 hours.

After the completion of stirring, a Kiriyama funnel was used to perform a filtration treatment under reduced pressure, separating a solid by filtration. To the solid separated by filtration on the Kiriyama funnel was poured 300 g of a washing solvent (NS Clean 100 produced by JX Nippon Oil & Energy Corporation), and a filtration treatment under reduced pressure was again performed to separate the solid by filtration. The wet solid was dried under reduced pressure (1 kPa or less) by a vacuum pump at 90 to 100°C for 7 hours, providing a surface-covered powder.

2) Production of Surface-Covered Powder (Production 2)

2-1) To a 5000 mL four-necked flask were added 1200 g of toluene and 300 g of alumina having an average particle size of 31 nm (produced by C. I. Kasei Co., Ltd., NanoTek $Al_2O_3$, specific surface area: 51.9 [$m^2/g$]), and the resultant was sufficiently stirred. Thereafter, 120 g of solution for forming an organic thin film (2) was charged thereto and the resultant was stirred for 3 hours. Thereafter, a solid content was separated by a centrifugal machine, the solid content separated was re-dispersed in toluene, and the dispersion was subjected to washing and centrifugation to

separate the solid content. This washing operation was performed several times.

The solid content washed and separated was dried under reduced pressure (1 kPa or less) by a vacuum pump at 50 to 100°C for about 7 hours, providing surface-covered powder E-5.

2-2) To a 5000 mL four-necked flask were added 1200 g of toluene and 300 g of alumina having an average particle size of 109 nm (produced by Taimei Chemicals Co., Ltd., Taimicron (TM-D), specific surface area: 13.8 ($m^2$/g)), and the resultant was sufficiently stirred. Thereafter, 40 g of solution for forming an organic thin film (2) was charged thereto and the resultant was stirred for 3 hours. Thereafter, a solid content was separated by a centrifugal machine, the solid content separated was re-dispersed in toluene, and the dispersion was subjected to washing and centrifugation to separate the solid content. This washing operation was performed several times.

The solid content washed and separated was dried under reduced pressure (1 kPa or less) by a vacuum pump at 50 to 100°C for about 7 hours, providing surface-covered powder E-6.

2-3) To a 5000 mL four-necked flask were added 2400 g of toluene and 600 g of alumina having an average particle size of 1 μm (α-Alumina, 1 to 2 μm, for polishing (Wako Pure Chemical Industries, Ltd., 013-23115)), and the resultant was sufficiently stirred. Thereafter, 41 g of solution for forming an organic thin film (2) was charged thereto and the resultant was stirred for 3 hours. Thereafter, a solid content was separated by a centrifugal machine, the solid content separated was re-dispersed in toluene, and the dispersion was subjected to washing and filtration under reduced pressure to separate the solid content.

The solid content washed and separated was dried under reduced pressure (1 kPa or less) by a vacuum pump at 50 to 100°C for about 7 hours, providing surface-covered powder E-7.

2-4) A 2000 mL four-necked flask was charged with 1000 g of solution for forming an organic thin film (1), 10 g of alumina having an average particle size of 31 nm (produced by C. I. Kasei Co., Ltd., NanoTek $Al_2O_3$, specific surface area: 51.9 ($m^2$/g)) was added thereto, and the resultant was stirred for 24 hours.

Thereafter, a solid content was separated by a centrifugal machine, the solid content separated was re-dispersed in toluene, and the dispersion was subjected to washing and centrifugation to separate the solid content. This washing operation was performed several times.

The solid content washed and separated was dried under reduced pressure (1 kPa or less) by a vacuum pump at 50 to 100°C for about 7 hours, providing surface-covered powder E-8.

2-5) A 1000 mL four-necked flask was charged with 500 g of solution for forming an organic thin film (1), 10 g of alumina having an average particle size of 109 nm (produced by Taimei Chemicals Co., Ltd., Taimicron (TM-D), specific surface area: 13.8 ($m^2$/g)) was added thereto, and the resultant was stirred for 24 hours.

Thereafter, a solid content was separated by a centrifugal machine, the solid content separated was re-dispersed in toluene, and the dispersion was subjected to washing and centrifugation to separate the solid content. This washing operation was performed several times.

The solid content washed and separated was dried under reduced pressure (1 kPa or less) by a vacuum pump at 50 to 100°C for about 7 hours, providing surface-covered powder E-9.

2-6) A 900 mL mayonnaise bottle was charged with 100 g of alumina having an average particle size of 300 nm (AKP-30 produced by Sumitomo Chemical Co., Ltd., specific surface area: 7.5 ($m^2$/g)) and 400 g of solution for forming an organic thin film (1), and the slurry concentration of the powder was set to 20% by weight. Then, a stirrer chip was put to the mayonnaise bottle, and the content of the bottle was stirred by a magnetic stirrer under room temperature at 400 r.p.m. for 3 hours.

After the completion of stirring, a Kiriyama funnel was used to perform a filtration treatment under reduced pressure, separating a solid by filtration. To the solid separated by filtration on the Kiriyama funnel was poured 300 g of a washing solvent (NS Clean 100 produced by JX Nippon Oil & Energy Corporation), and a filtration treatment under reduced pressure was again performed to separate the solid by filtration. The wet solid was dried under reduced pressure (1 kPa or less) by a vacuum pump at 90 to 100°C for 7 hours, providing surface-covered powder E-10.

(3) Measurement of Surface-Covered Powder

1) Each of surface-covered powders E-1 to E-4 obtained in (2) and not-treated powders R-1 to R-4 for comparison was subjected to the following measurements.

1-1) Specific Surface Area (Specific Surface Area Measurement by $N_2$ Gas Adsorption)

Measurement apparatus: high-speed specific surface area/pore size distribution measurement apparatus NOVA-1200 (manufactured by Quanachrome. Co)

Pretreatment condition: a measurement specimen was placed in a measurement cell, which was evacuated at 100°C (under vacuum) for 60 minutes.

Measurement principle: constant-volume method (blank correction type)

Detection method: relative pressure; a ratio of adsorption equilibrium pressure within a sample cell to saturated vapor pressure, by a pressure transducer

Amount of adsorption gas; an amount of gas injected, in ideal gas, was calculated from pressure detection by a pressure transducer and manifold temperature detection by a thermistor

Adsorption gas: nitrogen gas

Cell size: small pellet cell 1.8 $cm^3$ (stem outer diameter: 9 mm)

Measurement point: three points, $P/P_0$ = 0.1, 0.2, 0.3, at an adsorption side

Analysis parameter: specific surface area by BET multipoint method

Number of measurements: twice for one specimen

1-2) Median Diameter (Particle Size Distribution Measurement by Laser Diffraction/Scattering Method)

Measurement apparatus: laser diffraction/scattering type particle size distribution measurement apparatus

Pretreatment condition: irradiation with ultrasonic wave was performed in an ultrasonic bath for 30 minutes.

Measurement method: a dispersion medium was placed in a measurement cell for blank measurement, and then a specimen solution pre-treated was placed therein for measurement.

Measurement mode: Manual flow cell measurement

Measurement range: 0.01 to 3000 $\mu$m

Dispersion medium: ethanol

Relative refractive index: refractive index of specimen/refractive index of dispersion medium

Number of measurements: twice for one specimen

1-3) Loose Apparent Specific Gravity

[1] An accessory component such as sieve was installed on a vibration table.

[2] A powder was gently placed in a cup having an inner volume of 100 cc in a heaping manner.

[3] A blade was vertically stood to strike the powder over the upper face of the cup, and the weight was measured.

[4] Weight of powder [g]/100 [cc] = loose apparent specific gravity [g/cc]

1-4) Packed Apparent Specific Gravity

[1] An accessory component such as sieve was installed on a vibration table.
[2] A powder was placed in a cup having an inner volume of 100 cc while the vibration table being vibrated.
[3] When vibration was initiated and the powder was compressed, an additional powder was placed. The number of vibration (tapping) performed was 180.
[4] After the completion of vibration, a blade was vertically stood to strike excessive powder, and the weight was measured.
[5] Weight of powder [g]/100 [cc] = Packed apparent specific gravity [g/cc].

1-5) Repose Angle

[1] An accessory component such as sieve was installed on a vibration table.
[2] A proper amount of a powder for measurement was gently placed on a sieve.
[3] The powder was allowed to flow out from a funnel on the upper portion of the sieve in a vibration mode. When a certain repose angle was achieved, flowing out of the powder was stopped.
[4] An accessory protractor stand was set, and the protractor was moved so that the straight line portion of the protractor was parallel to the ridge line of the powder deposited, for scale reading.

1-6) Degree of Compression

[1] The degree of compression C was calculated by the following expression.
[2] $C = 100 \times (P - A)/P[\%]$, A: loose apparent specific gravity, and P: packed apparent specific gravity

Note: an apparatus for measuring powder characteristics comprehensively was used in 1-3) to 1-6). Measurement apparatus: POWDER TESTER (apparatus for measuring powder characteristics comprehensively) TYPE PT-E (manufactured by HOSOKAWA MICROMERITICS LABORATORY)

The measurement results in 1-1) to 1-6) are shown in Table 1.

[Table 1]

Table 1

| No. | | Crystal form | | Specific surface area | Median diameter | Loose apparent specific gravity | Packed apparent specific gravity | Repose angle | Degree of compression |
|---|---|---|---|---|---|---|---|---|---|
| | | | | $m^2/g$ | μm | g/cc | g/cc | ° | % |
| R-1 | $Al_2O_3$ | α | Non-treated | 7.3 | 1.63 | 0.396 | 0.749 | 39 | 47.1 |
| E-1 | | | Surface-treated | 6.22 | 1.52 | 0.632 | 1.11 | 44 | 43.1 |
| R-2 | | γ | Non-treated | 196 | 46.8 | 0.721 | 0.839 | 38 | 14 |
| E-2 | | | Surface-treated | 182 | 45 | 0.759 | 0.929 | 36 | 18.3 |
| R-3 | $TiO_2$ | Anatase type | Non-treated | 10.1 | 0.503 | 0.309 | 0.626 | 41 | 50.6 |
| E-3 | | | Surface-treated | 8.47 | 0.515 | 0.536 | 0.859 | 41 | 37.6 |
| R-4 | | Rutile type | Non-treated | 6.67 | 0.794 | 0.381 | 0.745 | 39 | 48.9 |
| E-4 | | | Surface-treated | 5.34 | 0.781 | 0.866 | 1.33 | 39 | 34.9 |

$Al_2O_3$ α: produced by Wako Pure Chemical Industries, Ltd., for polishing y: produced by Wako Pure Chemical Industries, Ltd.
$TiO_2$ Anatase type: produced by Wako Pure Chemical Industries, Ltd. (Wako first grade) Rutile type: produced by Wako Pure Chemical Industries, Ltd. (special grade reagent)

1-7) Titration by KOH

Each of 1 g of surface-treated alumina powder (E-10) and 1 g of a not-treated alumina powder was dispersed in 100 ml of a solvent (ethanol : water = 1 : 1), and subjected to titration by 1 N KOH. Each of the titration curves is illustrated in Figure 1.

From the fact that the titration curve of the surface-treated powder exhibited the same behavior as that of BLANK, it was confirmed that the surface of the alumina was covered with a dense organic thin film and no hydroxyl group of the alumina was present on the surface.

2) The following measurement was performed with respect to each of surface-covered powders E-8 to E10 obtained in (2).

2-1) thermal analysis measurement

Thermogravimetric measurement: a differential thermal analyzer (Rigaku Corporation, TG8120, measurement weight: about 10 mg) was used.
Vessel used: alumina vessel, flow rate: Air 500 ml/min
Measurement conditions: observation temperature range: RT to 1000°C, rate of temperature rise: 10°C/min

Spectrum processing: a weight loss rate from a temperature at which a peak due to decomposition of ODS detected by differential thermal analysis started being generated to a temperature at which the peak disappeared was measured by a thermogravimeter. The results were shown in Table 2.

[Table 2]

Table 2. Weight loss rate (%)

| No. | Particle size (nm) | Weight loss rate (%) |
|---|---|---|
| E-8 | 31 | 8.02 |
| E-9 | 109 | 1.7 |
| E-10 | 300 | 1.47 |

2-2) Calculation of Covering Rate

Each weight loss rate (%) listed in Table 2 was used to calculate the covering rate of each of E-8 to E-10 by the following method.

(i) ... Covering rate (%) = Weight of ODS covering (g) / Weight of ODS when entire surface being assumed to be covered with ODS (g) × 100%

(ii) ... Weight of ODS covering (g) = Weight of particle (g) × weight loss rate (%) / 100

(iii) ... Weight of ODS when entire surface being assumed to be covered with ODS (g) = Weight of particle (g) × [Specific surface area of raw material particle ($m^2/g$) / Specific surface area of monolayer ($m^2/g$)]

(iv) ... Specific surface area of raw material particle ($m^2/g$) ... from the value in catalog (data provided by manufacturer)

(v) ... Specific surface area of monolayer ($m^2/g$) ... it was suggested from the X-ray analysis result of a flat plate covered with ODS that crystallinity as a hexagonal crystal was achieved (see Figure 2), and the interval was as follows: a = 4.2 Å. When a film was assumed to be formed with having this interval on the entire surface, the specific surface area of the monolayer ($m^2/g$) was determined as follows.

Specific surface area of monolayer ($m^2/g$) = Area covered with one ODS molecule [$m^2$/molecule] / Weight of one ODS molecule [g/molecule]

= a (Å) in Figure 2 × b (Å) in Figure 2 / (Molecular weight of ODS [g/mol] / Number of molecules per mol [molecules/mol])

$$= 4.2 \times 10^{-10}\ [m] \times 4.2 \times 2/\sqrt{3} \times 10^{-10}\ [m] / (374\ [g/mol] / 6.02 \times 10^{23}\ [molecule/mol] = 328\ [m^2/g]$$

The covering rate was calculated from the thermal analysis result and shown in Table 3.
[Table 3]

Table 3. Covering rate (%)

| No. | Al particle size (nm) | Covering rate (%) |
|---|---|---|
| E-8 | 31 | 50.7 |
| E-9 | 109 | 40.4 |
| E-10 | 300 | 64.3 |

3) IR Measurement of Surface-Covered Powder

IR spectral measurements of E-7 (average particle size: 1000 nm), E-8 (average particle size: 31 nm) and E-9 (average particle size: 109 nm) among the surface-covered powders obtained in (2) were performed in the following conditions. The difference spectrum between each of the powders and a non-treated powder was illustrated in Figure 3.
Fourier transform infrared spectrophotometer (FTIR)
Measurement method: diffuse reflection method
Measurement apparatus: Magna 550 Type FT-IR manufactured by Thermo Fisher Scientific K. K.
Attachment: The Seagull manufactured by Harrick Scientific Products Inc.
Pretreatment of specimen: each powder was placed in a specimen cup, and the upper face of the cup was adjusted to be in the flat state.
Measurement conditions: unpolarized light, incident angle: 60 degrees
Spectrum processing: the resulting data was subjected to KM transformation according to the provision.

In all spectra, peaks by asymmetric stretch vibration and symmetric stretch vibration, indicating a zigzag structure due to all-trans $CH_2$ segments, were observed at 2918 $cm^{-1}$ and 2850 $cm^{-1}$, and it was indicated that alkyl groups of ODS were very regularly aligned and the monolayer was crystalline. A peak at 1468 $cm^{-1}$ also indicated that the monolayer was crystalline.

In addition, since stretch vibration of a $CH_3$ group at the terminal of the alkyl groups of ODS was observed at 2960 $cm^{-1}$, it was presumed that a film formed on the inorganic particle surface in the present invention was a monolayer in which $CH_3$ groups are regularly aligned on the outermost surface.

**Industrial Applicability**

The method of the present invention can be used to thereby form a crystalline monolayer having fewer impurities at a higher speed than that formed from a conventional metallic surfactant, regardless of the type of an inorganic powder.

The surface-covered inorganic powder of the present invention, the surface of which is covered with a crystalline monolayer, is more excellent than a conventional surface-covered inorganic powder in terms of dispersibility, fluidity, filling density, slidability, lubricity, liquid repellency, non-adhesiveness, acid resistance, alkali resistance, shape retention performance, storage stability, safety, affinity for a solvent or a resin, bioaffinity, molecular recognition ability, and the like.

The surface-covered inorganic powder of the present invention is useful in the fields of cutting and tailoring processing tools, pottery and porcelain, medical and pharmaceutical products, pigments and cosmetics, car parts, electric and electronic element components, optical and optical element components, building materials, resin products, fibers, sliding and lubricating agents, explosives, clarifying and modifying aids of water and soil, catalysts, adsorbing agents, and the like. In particular, it is useful as a paste for electrode materials for displays, a paste for electrode materials for laminated ceramic capacitors, an inorganic filler for sealing for semiconductors, an inorganic filler for under filling, an inorganic filler for heat radiating agents for mounting substrates, an inorganic filler for heat radiating fillers, a filler for heat radiating materials, a phosphor powder, an inorganic powder for inks for solar batteries, fine particles for toners, a filler for various additives, and a paste, an ink and a powder such as a powder for chromatography.

## Claims

**1.** An inorganic powder covered with a monolayer formed by at least one structural unit represented by formula (I):

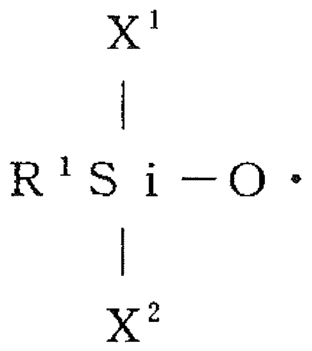

(I)

(wherein $R^1$ represents an alkyl group having 1 to 30 carbon atoms and optionally having a substituent, $X^1$ and $X^2$ each independently represent a hydroxyl group, or an $OR^2$ or O-Si bond, and • represents a binding site to an atom on the inorganic powder side),
wherein the monolayer is at least partially crystalline.

**2.** The inorganic powder according to claim 1, wherein $R^1$ is an octadecyl group.

**3.** A method for producing an inorganic powder at least partially covered with a crystalline monolayer, comprising bringing the inorganic powder into contact with a solution for forming an organic thin film containing:

(A) at least one compound represented by formula (II)

$$R^1Si(OH)_nX^3_{3-n} \quad \text{(II)}$$

(wherein $R^1$ represents an alkyl group having 1 to 30 carbon atoms and optionally having a substituent, $X^3$ represents a hydrolyzable group, and n represents any integer of 1 to 3),
(B) water of 10 ppm to a saturating concentration, and
(C) an organic solvent.

**4.** The method for producing an inorganic powder according to claim 3, wherein the solution for forming an organic thin film further contains at least one compound represented by formula (III):

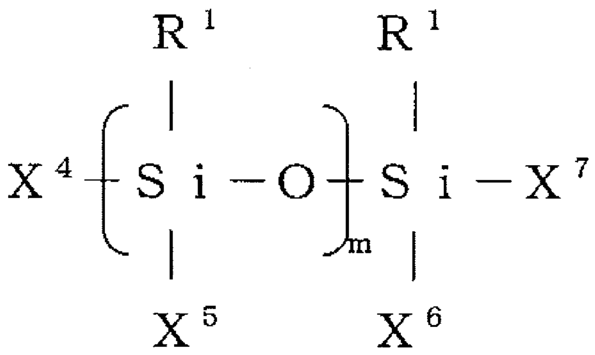 (III)

(wherein each $R^1$ each independently represents the same substituent as in $R^1$ in formula (II), $X^4$, $X^5$, $X^6$ and $X^7$ each independently represent a hydroxyl group or a hydrolyzable group, $X^4$ and $X^7$ may together be an oxygen atom, thereby forming a ring in which Si and an oxygen atom are alternately bound to each other, and m represents any integer of 1 to 3).

**5.** The method for producing an inorganic powder according to claim 3 or 4, wherein a content of the compound represented by formula (II) in the solution for forming an organic thin film is 0.01% by mass or more.

**6.** The method for producing an inorganic powder according to claim 3 or 4, wherein the organic solvent is at least one solvent selected from the group consisting of a hydrocarbon-based solvent, a fluorine-based solvent and a silicon-based solvent.

FIG. 1

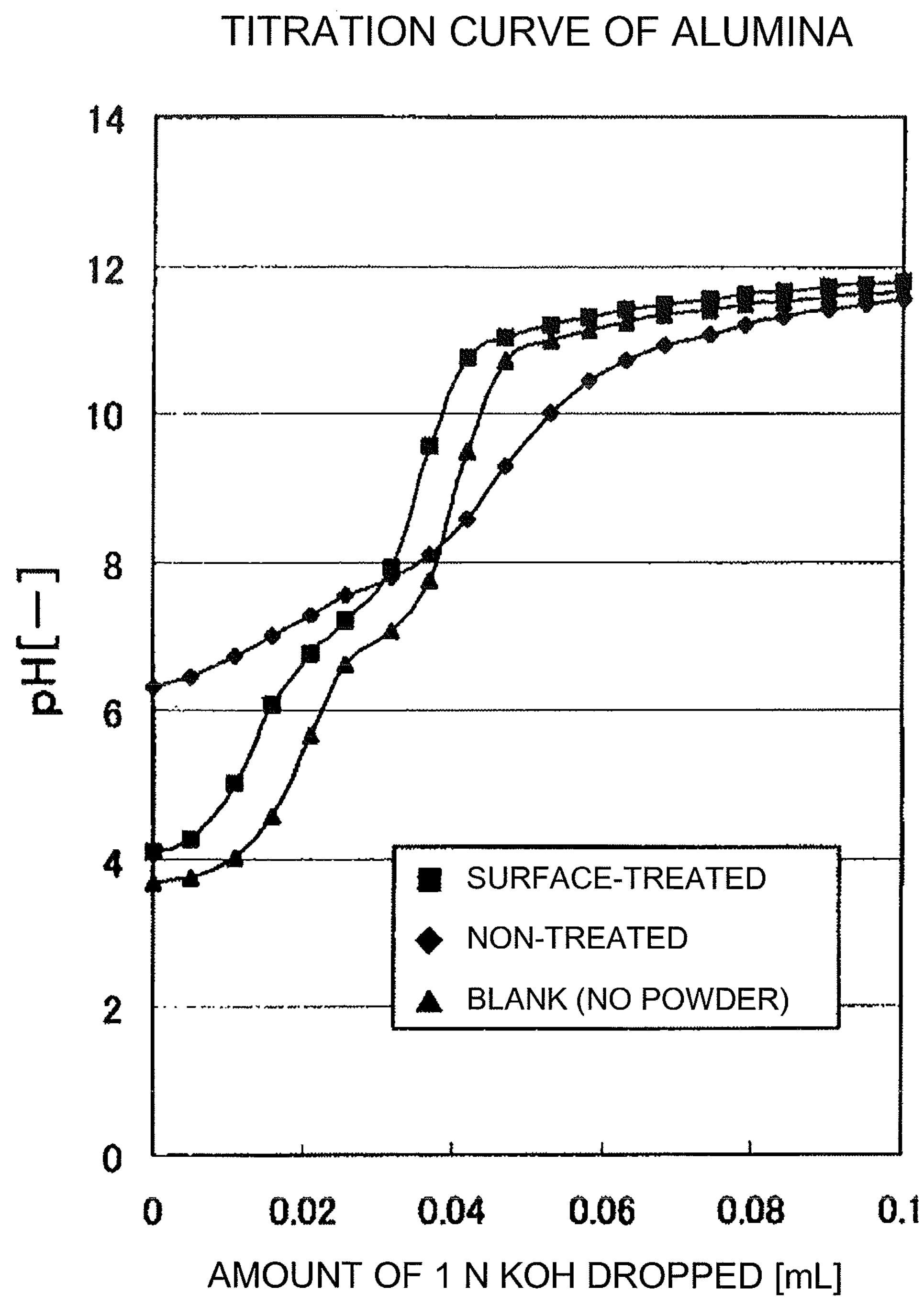
TITRATION CURVE OF ALUMINA
14
12
10
8
6
4
2
0
pH[—]
0
0.02
0.04
0.06
0.08
0.1
AMOUNT OF 1 N KOH DROPPED [mL]
SURFACE-TREATED
NON-TREATED
BLANK (NO POWDER)

FIG. 2

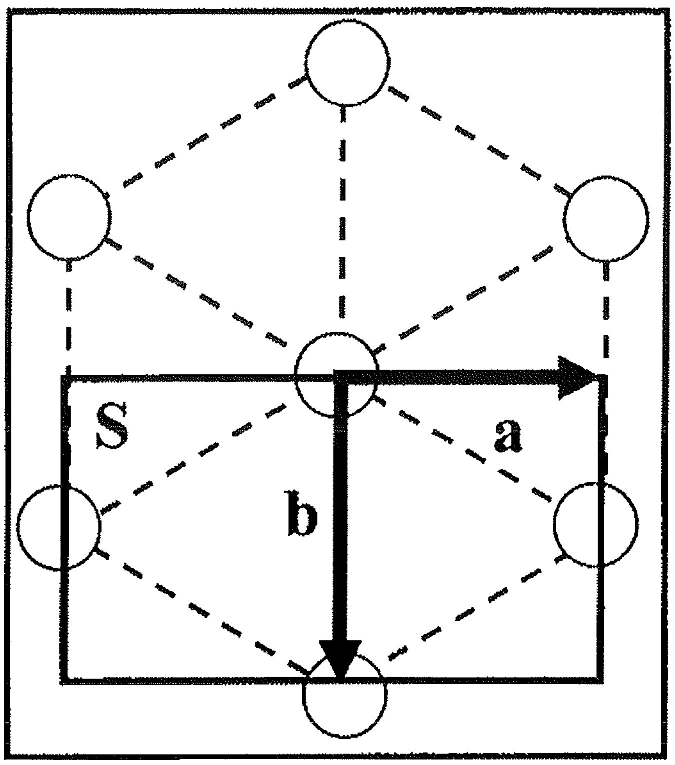

FIG. 3

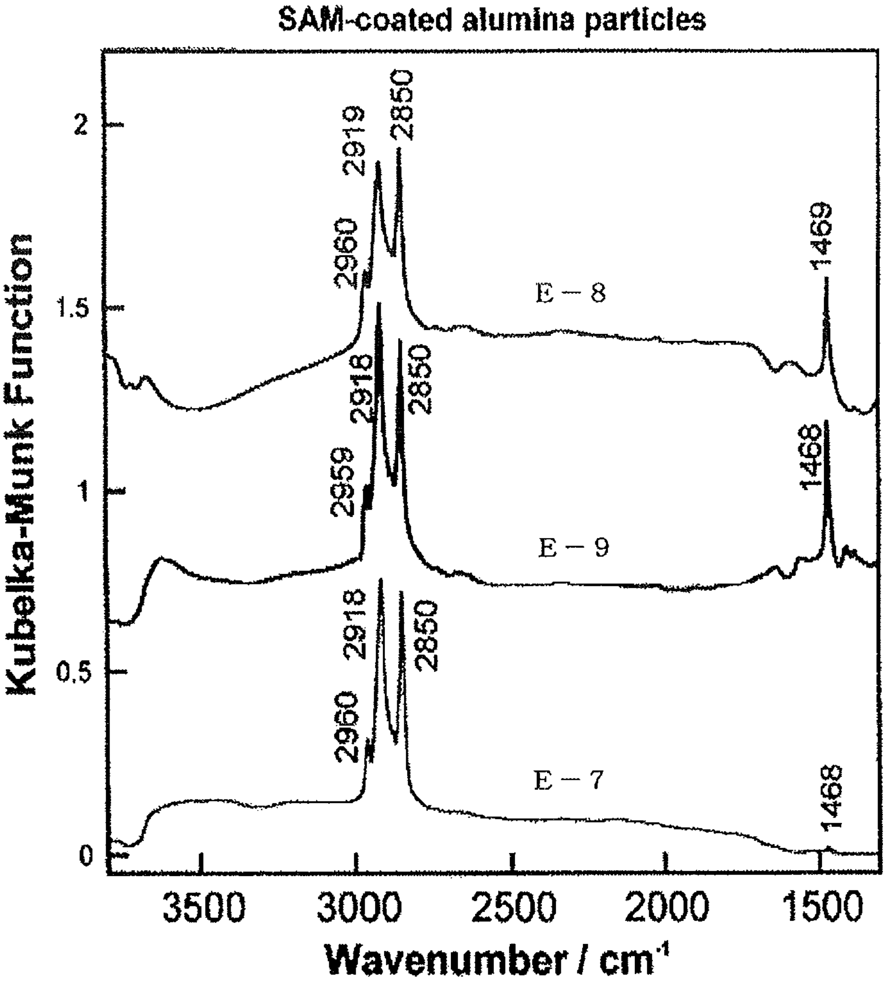
SAM-coated alumina particles
Kubelka-Munk Function
2
1.5
1
0.5
0
2960
2919
2850
1469
E − 8
2959
2918
2850
1468
E − 9
2960
2918
2850
E − 7
1468
3500
3000
2500
2000
1500
Wavenumber / cm-1

## INTERNATIONAL SEARCH REPORT

International application No.
PCT/JP2012/006663

**A. CLASSIFICATION OF SUBJECT MATTER**
*C01B13/14*(2006.01)i, *C01F7/02*(2006.01)i, *C01G23/047*(2006.01)i, *C09C1/00*(2006.01)i, *C09C3/12*(2006.01)i

According to International Patent Classification (IPC) or to both national classification and IPC

**B. FIELDS SEARCHED**

Minimum documentation searched (classification system followed by classification symbols)
C01B13/14, C01F7/02, C01G23/047, C09C1/00, C09C3/12

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)
JSTPlus(JDreamII), JST7580(JDreamII)

**C. DOCUMENTS CONSIDERED TO BE RELEVANT**

| Category* | Citation of document, with indication, where appropriate, of the relevant passages | Relevant to claim No. |
|---|---|---|
| Y | JP 2007-117828 A (Kagawa University), 17 May 2007 (17.05.2007), claims 1, 7, 9; paragraphs [0035], [0055]; examples 1 to 2 (Family: none) | 1-6 |
| Y | JP 2010-094583 A (Nippon Soda Co., Ltd.), 30 April 2010 (30.04.2010), claims 1 to 4, 7, 9, 11 to 15; paragraphs [0032], [0064], [0097], [0099], [0118], [0139] (Family: none) | 1-6 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 November, 2012 (12.11.12) | 27 November, 2012 (27.11.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011229218 A
- JP 2012006171 A
- JP 4132637 A
- JP 4221630 A
- JP 4367721 A
- JP 8337654 A
- JP 11228942 A
- JP 11322368 A
- WO 2006009202 A
- JP 5339518 A
- JP 2003055142 A
- JP 2009263213 A
- JP 62250074 A
- JP 10167931 A
- JP 10203926 A
- JP 11335227 A
- JP 2006106728 A
- JP 2008247834 A
- JP 9136815 A
- JP 9157397 A
- JP 2007117828 A
- JP 9208438 A
- JP 2000053421 A